# EUROPEAN PATENT APPLICATION

(11) **EP 1 422 621 A2**
(43) Date of publication of application: **26.05.2004**
(21) Application number: 03253806.8
(22) Date of filing: 17.06.2003
(51) Int. Cl.: G06F 9/445

(54) **Method for configuring a computer to use a remote device**

(30) Priority: 20.06.2002 US 176439
(71) Applicant: Xerox Corporation, Rochester, New York 14644 (US)
(72) Inventor: Thurlow, Barry J., Luton, Bedfordshire LU2 7PS (GB)
(74) Representative: Skone James, Robert Edmund

(57) **Abstract**

The method involves a user first sending or otherwise initiating an email to a remote device such as a printer. In the alternative, the printer device gains access to one or more end user's email addresses. Once obtained, the printer device automatically sends a reply email back to the user, preferably with a greeting or other message, with a package attached thereto or otherwise associated therewith containing installation software along with other configuration software and tools. Upon receipt of the installation package from the printing device, the end-user would click on the installation software, or preferably, an installation wizard or other interface program with preset defaults would guide the end-user through installation process. The software would query the end-user's computer to understand the computer's configuration. The necessary modifications and/or configuration changes to the end-user's computer would occur sufficient to allow the end-user to operate the networked remote printer device therefrom. Thereafter, the networked printing device would be ready for use from that user's computer.

## Description

The present invention is directed to methods for configuring set-ups, for example for installing driver software and configuring a networked device from a desktop computer and, in particular, to those systems and methods which enable a user of a networked device to communicate with the device by email and to receive a reply thereto which contains the installation software which assists the user to facilitate device setup and configuration prior to the subsequent operation thereof.

In the arts, devices (such as a printer or copier) can be networked to a plurality of end-users who can send documents to the device from their desktop computer. One awkward and often time consuming task associated with the arrival and installation of such a new device is that of installing the requisite driver software. Such drivers are known in the arts and are software applications which make a device visible to the users thereby allowing communication therebetween and which make the newly installed device usable via the desktop computer.

What makes this device installation process particularly troublesome is that many devices, even those from the same manufacturer, often require different drivers which when installed enable various features and capabilities associated with a particular device. In order to get the printer device up and running on a large organization's network, users must first find the correct driver file(s) and thereafter properly load the driver software onto their desktop computer. The process can at times be user-unfriendly and prone to error. To complete the driver software installation it may also require the user to know certain information about the printer such as it's network name, IP address, installed options, features, and so on. It can be a frustrating process at times for some users who are relatively unfamiliar with the driver software installation process thereby requiring the assistance of others more knowledgeable about software installation.

What is known in the arts are systems (such as the Xerox 6085) which use a method whereby an icon associated with the installed device is distributed by email from a system administrator (or other users) to those who are networked to the device and who need the driver software installed on their computer to properly communicate with the newly installed device. Once a user receives the icon, they click on it to install the software or they could thereafter drag and drop documents which are intended for that device onto the icon thereby enabling the use of the device from their computer.

In accordance with the present invention, a method to enable an end-user's computer to setup and configure a remote device prior to the subsequent operation thereof comprises:
a) said end-user entering an email address into said remote device;
b) said remote device receiving said email request and replying to said end-user's email with a reply email having installation software associated therewith;
c) said end-user receiving said reply email with said installation configuration software; and
d) running said installation software from said end-user's device such that said end-user's device is sufficiently configured to thereafter operate said remote device.

### Example

Once driver software for a networked printer device has been installed on an end-user's computer then that end-user can thereafter communicate with that particular printing device. In other words, the end-user can send documents to be printed by the networked printer and subsequently retrieve the printed copies from the printer's output paper tray. It should be understood that although the discussion herein of networked devices refers to printer devices, it is the intention herein that the present invention also find its uses in instances wherein other types of devices capable of network communication with remote users such as copiers and faxes, to name a few.

Although communication by reply email and installation software are known in the arts, it should be understood that the system and method of the present invention is specifically directed toward the novel concept of a remote networked device (such as a printer) communicating by email to one or more networked users. The communication containing certain software and other configuration information about the device and its features. In addition, installation software is attached thereto sufficient to enable the remote user to, upon receipt thereof, install the necessary software and other drivers such that the remote device can then be operated from the user's device.

The method involves a user first sending or otherwise initiating an email to a remote device such as a printer. In the alternative, the printer device gains access to one or more end user's email addresses. Once obtained, the printer device automatically sends a reply email back to the user, preferably with a greeting or other message, with a package attached thereto or otherwise associated therewith. The package contains installation software along with other configuration software and/or tools. Upon receipt of the installation package from the device, the end-user would click on the installation software, or preferably, an installation wizard or other interface program with preset defaults would guide the end-user through the installation process. The software would query the end-user's computer to understand that specific computer's setup and/or configuration. The necessary modifications or configuration changes to the end-user's computer would then be made sufficient to enable the end-user's computer to operate the networked remote device therefrom. Thereafter, the networked device would be ready for use by that user.

With regards to the system of the present invention, the computer network system is in communication with a remote networked device which the user needs to access or otherwise make use of from their desktop or laptop computer in network communication therewith. Both the remote device and the user's computer have email capability either directly there between or through the use of a server configured for this purpose. In the alternative, a database of email addresses is also envisioned herein which is accessible by the remote device. At the console of the remote device, the user enters the email address of their networked desktop or laptop computer intended to access the remote device. The remote device, once having gained access to or knowledge of a end-user's email address, thereafter sends to that email address a message, preferably a greeting of sorts, with an attachment containing the necessary software tools which enable the user to configure their desktop or laptop computer for subsequent operation, access, and/or control from the remote device networked therewith. The user then either through a wizard or other interface, thereafter runs the associated software tools. The software scans the user's computer so as to understand that computer's configuration. The software then modified or adapts the user's computer's configuration and configure such that, upon completion thereof, the user's computer can access or otherwise operate the end device from that desktop or laptop computer.

What is novel herein is the combination of elements. Specifically, a remote device having email capability being networked with at least one end-user's computer also having email capability. The end user entering into the remote device their respective email address. In the alternative, the remote device accesses a database of email addresses. The remote device, once obtaining the end-user's email address, thereafter sending to that email address a package of software (or an email with an attachment therewith). The software package being activatable by the user or, in the alternative, automatically activatable upon opening or upon receipt. Preferably, the software package has a wizard-type interface conveniently minimizing inputs from the user. The wizard then scans the user's computer to understand the specific configuration thereof. Then, setting up the computer such that it can thereafter work with or otherwise operation or control the remote device.

Since there is no need for the user to know any technical details about the network, remote device, or their own desktop or laptop computer, the process advantageously removes the necessity for having Information Technology (IT) Staff on hand. This results in increased customer (or end-user) satisfaction and empowerment. In addition, the present invention increases the speed with which new end-users can access newly installed network office equipment. This has the benefit of potentially increasing sales of such equipment and other similarly enabled consumables. Further, since the equipment to be installed already has the software tools necessary for installation thereof, the present invention further reduces the probability of problems arising from the end-user's not having all the software necessary to configure their desktop or laptop computers.

## Claims

1. A method to enable an end-user's computer to setup and configure a remote device prior to the subsequent operation thereof and comprising:
a) said end-user entering an email address into said remote device;
b) said remote device receiving said email request and replying to said end-user's email with a reply email having installation software associated therewith;
c) said end-user receiving said reply email with said installation configuration software; and
d) running said installation software from said end-user's device such that said end-user's device is sufficiently configured to thereafter operate said remote device.

2. A method which assists an end-user to facilitate setup and configuration of a remote device having email capability from their personal computer also having email capability and in network communication with said remote device, said method comprising:
a) entering into said remote device an email address of said end-user's computer which, upon gaining access to the end-user's email address, said remote device sending to that address an email with installation software attached thereto;
b) said end-user receiving said email from said remote device on their personal computer;
c) said end-user accessing the installation software packaged attached thereto;
d) said end-user running said software package; and
e) configuring said computer for subsequent operation of said remote device therefrom.

3. A method as defined in claim 2, wherein the step of entering into said remote device the email address of said end-user's computer comprises the step of providing said remote computer with access to a database wherein said end-user's email address can be found.

4. A method as defined in claim 2 or claim 3, wherein said step of said remote device sending to that email address an email with the installation software package attached thereto comprises providing to said end-user a link to a website wherein said installation software can be found.

5. A method as defined in claim 4, further comprising the steps of downloading from said website the installation software and thereafter running said software on their personal computer.

6. A method as defined in claim 4, further comprising the steps of running said installation software without downloading from the website the installation package itself such that the installation software sets up and configures the end-user's computer remotely from the web link and not while physically residing on the end-user's computer.

7. A method as defined in any of the preceding claims, wherein said installation software provides a convenient wizard interface, further comprising the step of running said installation wizard.

8. A method according to any of the preceding claims, wherein the remote device comprises an output device such as a printer.

9. A computer program product comprising program code on a record medium, the computer program defining a method according to any of the preceding claims.
